# EUROPÄISCHE PATENTSCHRIFT

(11) **EP 2 796 288 B1**
(45) Veröffentlichungstag und Bekanntmachung des Hinweises auf die Patenterteilung: **27.06.2018**
(21) Anmeldenummer: 13164617.6
(22) Anmeldetag: 22.04.2013
(51) Int. Cl.: B32B 17/10, B60R 1/12, B60R 11/04, B60S 1/08

(54) **Fahrzeugscheibe mit einem optischen Filter**
Vehicle pane with an optical filter
Vitre de véhicule dotée d'un filtre optique

(43) Veröffentlichungstag der Anmeldung: 29.10.2014
(73) Patentinhaber: Saint-Gobain Glass France, 92400 Courbevoie (FR)
(72) Erfinder: Wohlfeil, Dirk, 4730 Raeren (BE)
(74) Vertreter: Lendvai, Tomas

(56) Entgegenhaltungen:
- EP-A1- 2 206 601
- DE-A1- 4 017 063
- DE-A1- 4 142 146
- DE-A1- 4 300 741
- DE-A1- 10 009 992
- DE-A1- 10 132 454
- DE-A1- 10 235 368
- DE-A1-102010 004 443

## Beschreibung

Die Erfindung betrifft eine Fahrzeugscheibe, mit einem optischen Filter, ein Verfahren zu deren Herstellung und deren Verwendung.

Moderne Fahrzeuge sind häufig mit verschiedenen optischen Sensoren ausgestattet. Beispiele hierfür sind Kamerasysteme, Entfernungsmesser oder Regensensoren. In Kraftfahrzeugen sind solche Sensoren insbesondere an der Windschutzscheibe angebracht und nutzen durch die Windschutzscheibe hindurchtretende Strahlung.

Die Sensoren können zur Erfüllung ihrer Funktion beispielsweise elektromagnetische Strahlung im ultravioletten, im sichtbaren oder im infraroten Spektralbereich nutzen. Allerdings kann die Empfindlichkeit der Sensoren durch Strahlung anderer Wellenlängen, die zur eigentlichen Funktion nicht genutzt werden, nachteilig beeinflusst werden. Regensensoren arbeiten zur Detektion von auf der Windschutzscheibe befindlichen Regentropfen üblicherweise mit infraroter Strahlung. Ihre Empfindlichkeit wird insbesondere tagsüber durch sichtbares Licht und ultraviolette Anteile der Sonnenstrahlung herabgesetzt. Es besteht also ein Bedarf, störende Strahlungsanteile aus der auf den Sensor treffenden Strahlung herauszufiltern, um die Effizienz des Sensors zu erhöhen. Es ist prinzipiell möglich, ein separates optisches Filter in dem Gehäuse für den Sensor zu positionieren. An den Oberflächen des Filters (Übergang Luft-Filter) treten dabei allerdings Reflexionsverluste auf, was für die Effizienz des Sensors wiederum unvorteilhaft ist.

EP 2 206 601 A1 offenbart ein optisches Filter (Tageslichtblocker), welches in die thermoplastische Zwischenschicht einer Verbundscheibe einlaminiert ist. Diese Lösung ist dabei auf Verbundscheiben beschränkt, wohingegen es auch erwünscht sein kann, ein Einscheiben-Sicherheitsglas, wie eine Seitenscheibe oder Heckscheibe, mit einem optischen Filter zu versehen. Zudem können sich bei der Herstellung der Verbundscheibe Probleme ergeben, beispielsweise Verwerfungen der thermoplastischen Zwischenschicht durch das Einlegen des optischen Filters. DE 10 2010 004443 A1 und DE 100 09 992 A1 offenbaren eine Filtereinrichtung für einen einer transparenten Kraftfahrzeugscheibe zugeordneten optischen Sensor, umfassend zumindest ein Filterelement, welches eine den Anforderungen des jeweiligen Sensors entsprechende spektrale Transmission-Charakteristik aufweist, dadurch gekennzeichnet, dass das zumindest eine Filterelement örtlich begrenzt ist und in der Innenseite der Scheibe aufgebracht ist.

Die Aufgabe der vorliegenden Erfindung besteht darin, eine verbesserte Fahrzeugscheibe mit optischem Filter bereitzustellen, wobei die vorstehend beschriebenen Nachteile des Stands der Technik vermieden werden.

Die Aufgabe der vorliegenden Erfindung wird erfindungsgemäß durch eine Fahrzeugscheibe mit einem optischen Filter gemäß Anspruch 1 gelöst. Bevorzugte Ausführungen gehen aus den Unteransprüchen hervor.

Die erfindungsgemäße Kraftfahrzeug-Windschutzscheibe oder - Heckscheibe mit einem optischen Filter umfasst mindestens
- eine Scheibe und
- ein optisches Filter, welches über zumindest eine Schicht eines Klebstoffs mit der innenraumseitigen Oberfläche der Scheibe verbunden ist,
wobei die Fläche des optischen Filters weniger als 20 % der Fläche der Scheibe beträgt und wobei das optische Filter im Strahlengang eines Senders oder Empfängers von elektromagnetischer Strahlung, welcher in einem an der innenraumseitigen Oberfläche der Scheibe angebrachten Gehäuse befindlich ist, angeordnet ist,
wobei das optische Filter ein Tageslichtfilter ist und wobei die Schicht des Klebstoffs eine Absorption im sichtbaren Spektralbereich von kleiner als 5% aufweist. Die erfindungsgemäße Fahrzeugscheibe ist dafür vorgesehen, in einer Öffnung, insbesondere Fensteröffnung eines Fahrzeugs, den Innenraum gegenüber der äußeren Umgebung abzutrennen. Die innenraumseitige Oberfläche ist im Sinne der Erfindung diejenige Oberfläche der Scheibe, welche in Einbaulage dem Innenraum zugewandt ist. Ist die erfindungsgemäße Fahrzeugscheibe ein Scheibenverbund, welcher neben der Scheibe beispielsweise eine weitere Scheibe umfasst, so ist die innenraumseitige Oberfläche der Scheibe erfindungsgemäß auch die innenraumseitige Oberfläche des Scheibenverbunds.

Der Vorteil der Erfindung liegt in der Anordnung des optischen Filters an der innenraumseitigen Oberfläche der Scheibe über eine Klebstoffschicht. Dadurch können zusätzliche Reflexionsverluste durch die Filteroberflächen vermieden werden. Zudem ist die erfindungsgemäße Lösung gleichermaßen auf Einscheiben-Gläser wie auf Verbundgläser anwendbar. Die erfindungsgemäße Fahrzeugscheibe ist außerdem vorteilhaft einfach herzustellen, wobei Verwerfungen oder andere Mängel in der Zwischenschicht vermieden werden können, wenn es sich bei der Fahrzeugscheibe um eine Verbundscheibe handelt.

Als optisches Filter im Sinne der Erfindung wird ein Element bezeichnet, welches in mindestens einem Teil des Spektralbereichs von 200 nm bis 1200 nm eine Transmission von kleiner als 50 %, bevorzugt kleiner als 30 % und besonders bevorzugt kleiner als 10 % aufweist.

Das erfindungsgemäße optische Filter ist ein Tageslichtfilter. Das Tageslichtfilter weist im Wellenlängenbereich von 380 nm bis 800 nm eine gemittelte Transmission von kleiner als 10% und im Wellenlängenbereich von 800 nm bis 1000 nm eine gemittelte Transmission von größer als 20% auf. In einer besonders vorteilhaften Ausgestaltung weist das Tageslichtfilter eine gemittelte Transmission von kleiner als 5 %, bevorzugt kleiner als 0,1 % im Spektralbereich von 380 nm bis 800 nm auf. Die gemittelte Transmission im Spektralbereich von 800 nm bis 1000 nm beträgt besonders bevorzugt größer als 50%, ganz besonders bevorzugt größer als 85%.

Das erfindungsgemäße optische Filter ist bevorzugt als Folie ausgebildet. Die Folie enthält zumindest einen Kunststoff. Der Kunststoff-Folie sind bevorzugt geeignete absorbierende Materialen, beispielsweise Pigmente oder Farbstoffe zugesetzt sind, um die Filterwirkung zu erreichen. Alternativ ist die Kunststoff-Folie mit einer geeigneten Beschichtung versehen, um die Filterwirkung zu erreichen. Die Folie enthält besonders bevorzugt zumindest Polybutylenterephthalat (PBT), Polyethylenterephthalat (PET), Polycarbonat (PC), Ethylvinylacetat (EVA) oder Polyvinylbutyral (PVB) oder Gemische oder Copolymere davon. Ganz besonders bevorzugt sind Polyethylenterephthalat (PET) und/oder Polycarbonat (PC). Das ist besonders vorteilhaft im Hinblick auf die optische Qualität der Folie. So lassen sich optische Filter mit in den gewünschten Spektralbereichen hoher Transmission und geringen Verarbeitungsmängeln wie Blasen oder Verwerfungen erzeugen.
Das erfindungsgemäße optische Filter weist bevorzugt eine Dicke von 5 µm bis 200 µm, bevorzugt von 25 µm bis 150 µm auf. Folien mit diesen Dicken sind gut zu handhaben und einfach an der erfindungsgemäßen Fahrzeugscheibe anzubringen. Zudem lässt sich in diesem Bereich für die Dicke eine vorteilhafte optische Filterwirkung erzielen.
Die Fläche des optischen Filters richtet sich nach der Verwendung im Einzelfall, insbesondere nach der Größe eines Senders oder Empfängers, in dessen Strahlengang das Filter typischerweise angeordnet ist. Die Fläche beträgt beispielsweise von 1 cm² bis 10000 cm², bevorzugt von 5 cm² bis 1000 cm² und besonders bevorzugt von 10 cm² bis 500 cm². In diesem Bereich für die Fläche wird einerseits die Funktion des Filters erfüllt, andererseits beeinflusst das Filter die Durchsicht durch die Fahrzeugscheibe für die Fahrzeuginsassen nicht störend. Das optische Filter weist bevorzugt eine Fläche auf, welche weniger als 20 % der Fläche der erfindungsgemäßen Fahrzeugscheibe beträgt. Die Fläche des Filters kann prinzipiell jede beliebige Form aufweisen, beispielsweise eine kreisförmige, elliptische, rechteckige, trapezförmige oder polygonale Form. Die Form richtet sich dabei insbesondere nach der Form des Strahlengangs des genannten Empfängers oder Senders.
Das optische Filter ist bevorzugt im Randbereich der Scheibe angeordnet. Dadurch beeinträchtigt das Filter die Durchsicht durch die Fahrzeugscheibe für die Fahrzeuginsassen nicht. Zudem wird das Filter weniger mechanischen Beanspruchungen ausgesetzt, wie sie im Hauptdurchsichtbereich der Fahrzeugscheibe beispielsweise durch Wischen oder Kratzen auftreten können. Der Abstand des optischen Filters, gemessen von der geometrischen Mitte des Filters, zur Seitenkante der Scheibe beträgt bevorzugt kleiner oder gleich 30 cm. Ist die erfindungsgemäße Fahrzeugscheibe eine Windschutzscheibe, so ist das optische Filter insbesondere außerhalb der Sichtbereiche A und B gemäß Regelung Nr. 43 der Wirtschaftskommission der Vereinten Nationen für Europa (ECE-R43) angeordnet.
Aus ästhetischen Gründen kann es vorteilhaft sein, dass die Kanten des optischen Filters im Bereich eines opaken Abdeckdrucks, bevorzugt Siebdrucks angeordnet sind. Dadurch sind die Kanten des optischen Filters bei Durchsicht durch die Fahrzeugscheibe von der äußeren Umgebung in den Innenraum abgedeckt und für den Betrachter nicht sichtbar.
Der Klebstoff, mit welchen das optische Filter an der Oberfläche der Scheibe angebracht ist, ist bevorzugt ein sogenannter optischer Klebstoff oder optisch klarer Klebstoff. Solche Klebstoffe zeichnen sich durch eine hohe Lichttransmission, eine geringe Trübung, keine doppelte Lichtbrechung, hohe UV-Beständigkeit und gute Alterungsbeständigkeit aus. Es hat sich gezeigt, dass solche Klebstoffe zur Anbringung des optischen Filters besonders geeignet sind. Unkontrollierte und daher unerwünschte Beeinträchtigungen der Lichttransmission oder unästhetische Verwerfungen können dadurch vermieden werden. Die Klebstoffschicht weist eine Absorption im sichtbaren Spektralbereich von kleiner als 5%, insbesondere kleiner als 2% oder sogar 1% auf und bevorzugt eine Trübung von kleiner als 5%, insbesondere kleiner als 2% oder sogar 1 %.
Die Schicht des Klebstoffs ist bevorzugt als homogene Schicht ausgebildet.

Die Schicht des Klebstoffs weist bevorzugt eine Dicke von kleiner oder gleich 100 µm auf, besonders bevorzugt kleiner oder gleich 50 µm, ganz besonders bevorzugt kleiner oder gleich 30 µm. Damit werden eine effektive Haftung des optischen Filters an der Scheibenoberfläche erreicht sowie gute optische Eigenschaften. Auch können Inhomogenitäten beim Anbringen von Klebstoffschichten mit solch geringen Dicken vorteilhaft vermieden werden. Zudem sind Klebstoffschichten mit diesen Dicken kommerziell als Klebstoff-Filme erhältlich.
Der Klebstoff ist bevorzugt ein chemisch wirkender, insbesondere chemisch härtender Klebstoff, besonders bevorzugt ein Acrylat-Klebstoff. Die Schicht des Klebstoffs ist insbesondere keine thermoplastisch wirkende Klebefolie, also keine thermoplastische Folie, welche nach Erhitzen ein Verkleben des optischen Filters mit der Scheibenoberfläche bewirkt, wie beispielsweise die thermoplastischen Folien der Zwischenschicht einer Verbundglasscheibe.

Die von außen durch die Scheibe, die Klebstoffschicht und das optische Filter tretende Strahlung sollte möglichst geringe Reflexionsverluste aufweisen. Das ist besonders vorteilhaft im Hinblick auf die Effizienz eines im Fahrzeuginneren angeordneten Sensors. Reflexionsverluste können effektiv vermindert werden, wenn die Scheibe, die Klebstoffschicht und das optische Filter einen möglichst ähnlichen Brechungsindex aufweisen. In einer vorteilhaften Ausgestaltung weichen der Brechungsindex der Scheibe, der Brechungsindex des Klebstoffs und der Brechungsindex des optischen Filters um höchstens 0,2 voneinander ab, bevorzugt um höchstens 0,1, besonders bevorzugt um höchstens 0,08. Anders ausgedrückt beträgt die maximale Differenz der Brechungsindizes von Scheibe, Klebstoff und optischem Filter höchstens 0,2, bevorzugt höchstens 0,1, besonders bevorzugt um höchstens 0,08. Das bedeutet, dass die Differenz zwischen dem kleinsten der drei genannten Brechungsindizes und dem größten der drei genannten Brechungsindizes höchstens 0,2 beträgt, bevorzugt höchstens 0,1, besonders bevorzugt höchstens 0,08. Die angegebenen Werte für Brechungsindizes sind bei einer Wellenlänge von 550 nm gemessen. Innenraumseitig der Scheibe ist ein Sender oder ein Empfänger von elektromagnetischer Strahlung angeordnet. Es können auch ein Sender und ein Empfänger innenraumseitig der Scheibe angeordnet sein. Der Sender ist dafür vorgesehen, Strahlung vom Innenraum durch die Fahrzeugscheibe hindurch in die äußere Umgebung zu senden. Der Sender ist beispielsweise ein Laser. Der Empfänger ist dafür vorgesehen, aus der äußeren Umgebung durch die Fahrzeugscheibe in den Innenraum tretende Strahlung zu detektieren. Der Empfänger ist beispielsweise ein Sensor oder eine Kamera, eine Videokamera, eine Infrarotkamera, ein Restlichtverstärker, ein Regensensor oder ein Photodetektor. Das erfindungsgemäße optische Filter ist dabei im Strahlengang des Senders oder Empfängers angeordnet. Das bedeutet, dass die vom Sender ausgehende Strahlung beziehungsweise die von der äußeren Umgebung auf den Sensor treffende Strahlung durch das optische Filter hindurchtritt. Das optische Filter ist bevorzugt in einem sogenannten Sensorfenster oder Kamerafenster angeordnet.

Der Sender oder Empfänger ist innerhalb eines Gehäuses angeordnet. Das Gehäuse ist an der innenraumseitigen Oberfläche der Scheibe angebracht, beispielsweise angeklebt. Durch das Gehäuse und einen Bereich der innenraumseitigen Oberfläche der Scheibe, auf welchem das optische Filter angeordnet ist, wird ein geschlossener Raum ausgebildet, in dem der Sender oder Empfänger und das optische Filter angeordnet sind. Das Gehäuse enthält bevorzugt zumindest einen Kunststoff, beispielsweise ein Gemisch (Blend) von Polycarbonat und Acrylnitril-Butadien-Styrol (PC-ABS) oder von Polycarbonat und Acrylester-Styrol-Acrylnitril (PC-ASA).
Die Scheibe enthält bevorzugt Glas, besonders bevorzugt Flachglas, Floatglas, Quarzglas, Borosilikatglas, Kalk-Natron-Glas oder Kunststoffe, vorzugsweise starre Kunststoffe, insbesondere Polyethylen, Polypropylen, Polycarbonat, Polymethylmethacrylat, Polystyrol, Polyamid, Polyester, Polyvinylchlorid und / oder Gemische davon.
Die Dicke der Scheibe kann breit variieren und so hervorragend den Erfordernissen im Einzelfall angepasst werden. Vorzugsweise beträgt die Dicke der Scheibe von 0,5 mm bis 10 mm und bevorzugt von 1 mm bis 5 mm, ganz besonders bevorzugt von 1,4 mm bis 3 mm. Die Größe der Scheibe kann breit variieren und richtet sich nach der erfindungsgemäßen Verwendung. Die Scheibe weist insbesondere im Fahrzeugbau übliche Flächen von 200 cm² bis zu 5 m² auf.

Die erfindungsgemäße Fahrzeugscheibe kann eine Einzelscheibe sein, insbesondere Einscheiben-Sicherheitsglas (ESG). Solche Einzelscheiben sind im Fahrzeugbereich als insbesondere Seitenscheiben oder Heckscheiben üblich.
In einer bevorzugten Ausgestaltung ist die erfindungsgemäße Fahrzeugscheibe eine Verbundscheibe, insbesondere Verbund-Sicherheitsglas (VSG). Solche Scheiben sind im Fahrzeugbereich insbesondere als Windschutzscheiben oder Dachscheiben, zunehmend auch als Heckscheiben oder Seitenscheiben üblich. Die Scheibe, an der das optische Filter angebracht ist, ist dabei erfindungsgemäß die Innenscheibe, welche über zumindest eine thermoplastische Zwischenschicht mit einer Außenscheibe verbunden ist. Mit Innenscheibe wird dabei die dem Innenraum zugewandte Scheibe bezeichnet, mit Außenscheibe die der äußeren Umgebung zugewandte Scheibe. Somit ist die innenraumseitige Oberfläche des Scheibe, welche mit dem optischen Filter versehen ist, auch die innenraumseitige Oberfläche der Verbundscheibe.
Die Außenscheibe enthält bevorzugt Glas, besonders bevorzugt Flachglas, Floatglas, Quarzglas, Borosilikatglas, Kalk-Natron-Glas oder Kunststoffe, vorzugsweise starre Kunststoffe, insbesondere Polyethylen, Polypropylen, Polycarbonat, Polymethylmethacrylat, Polystyrol, Polyamid, Polyester, Polyvinylchlorid und / oder Gemische davon. Die Außenscheibe weist bevorzugt eine Dicke von 0,5 mm bis 10 mm, besonders bevorzugt von 1 mm bis 5 mm, ganz besonders bevorzugt von 1,4 mm bis 3 mm auf.
Die thermoplastische Zwischenschicht enthält bevorzugt thermoplastische Kunststoffe, beispielsweise Polyvinylbutyral (PVB), Ethylenvinylacetat (EVA), Polyurethan (PU) und/oder Polyethylenterephthalat (PET). Die Zwischenschicht kann eine oder mehrere Schichten umfassen, die jeweils durch eine thermoplastische Folie ausgebildet werden und deren Dicke bevorzugt jeweils von 0,3 mm bis 1 mm beträgt.
Das Scheibe und/oder gegebenenfalls die Außenscheibe können klar und farblos, aber auch getönt oder gefärbt sein. Das Scheibe beziehungsweise die Verbundscheibe kann plan sein oder auch leicht oder stark in einer oder in mehreren Richtungen des Raumes gebogen. Plane Scheiben treten beispielsweise bei großflächigen Verglasungen von Bussen, Zügen oder Traktoren auf. Gebogene Scheiben treten beispielsweise bei Verglasungen im Kraftfahrzeugbereich auf, wobei typische Krümmungsradien im Bereich von etwa 10 cm bis etwa 40 m liegen.

Die Erfindung umfasst weiter ein Verfahren zur Herstellung einer erfindungsgemäßen Fahrzeugscheibe mit einem optischen Filter, wobei
(a) ein optisches Filter (2) mit einer Schicht eines Klebstoffs (3) versehen wird und
(b) das optische Filter (2) durch die Schicht des Klebstoffs (3) auf der innenraumseitigen Oberfläche (I) einer Scheibe (1) angebracht wird, wobei die Fläche des optischen Filters (2) weniger als 20 % der Fläche der Scheibe (1) beträgt, und
(c) ein Sender oder Empfänger (6) von elektromagnetischer Strahlung innenraumseitig der Scheibe (1) angeordnet wird, wobei das optische Filter (2) im Strahlengang des Senders oder Empfängers angeordnet wird.

Die Schicht des Klebstoffs ist bevorzugt als Folie bereitgestellt. Solche Klebstofffolien, deren bevorzugte Merkmale wie Material, Dicke und optische Eigenschaften bereits vorstehend beschrieben wurden, sind kommerziell erhältlich.

Bevorzugt werden zunächst die Klebstofffolie mit den Abdeckfolien und das optische Filter auf die gleiche Form und Größe zurechtgeschnitten.

Auch das optische Filter ist bevorzugt aus Folie ausgebildet.

Die Klebstoff-Folie und die Filter-Folie lassen sich ohne großen Aufwand auf die gewünschte Größe und Form zurechtschneiden. Die zurechtgeschnittene Klebstoff-Schicht und das zurechtgeschnittene optische Filter werden in Deckung angeordnet. Die Klebstoff-Schicht wird unter Druckeinwirkung mit dem optischen Filter einerseits und mit der Scheibe andererseits verbunden. Die Verbindung des Klebstoffs mit dem optischen Filter kann dabei zeitlich vor, nach oder zeitgleich mit der Verbindung des Klebstoffs mit der Scheibe erfolgen. In einer bevorzugten Ausführung wird der Klebstoff zuerst mit dem optischen Filter verbunden. Das mit dem Klebstoff versehene optische Filter kann so auch in größerer Stückzahl vorbereitet werden, was im Sinne einer Massenfertigung der erfindungsgemäßen Fahrzeugscheibe vorteilhaft ist.

Die Klebstofffolie ist bevorzugt zu Beginn des Verfahrens beidseitig mit zwei Abdeckfolien versehen. So kann der Klebstoff vorteilhaft gehandhabt werden In einer bevorzugten Ausführeng des Verfahrens wird zunächst die erste Abdeckfolie entfernt und der Klebstoff mit dem optischen Filter in Deckung gebracht und verbunden, wobei die zweite Abdeckfolie vom optischen Filter abgewandt ist. Anschließen wird die zweite Abdeckfolie entfernt und das optische Filter über die Klebstoffschicht auf der Scheibenoberfläche angeordnet.

Ist die erfindungsgemäße Fahrzeugscheibe eine Verbundscheibe, so wird in einer vorteilhaften Ausführung zunächst die Verbundscheibe hergestellt und anschließend das optische Filter mit der Klebstoff-Schicht angebracht. Das hat den Vorteil, dass das optische Filter während der Herstellung der Verbundscheibe nicht thermisch oder mechanisch belastet wird, wodurch Beschädigungen des Filters vermieden werden können. Prinzipiell ist es natürlich auch möglich, zunächst das Filter über die Klebstoff-Schicht auf der Scheibe anzubringen und anschließend die Scheibe über die thermoplastische Zwischenschicht mit der Außenscheibe zu verbinden. Es ist ein großer Vorteil der Erfindung, dass die Herstellung der Verbundscheibe und das Anbringen des optischen Filters verfahrenstechnisch voneinander getrennt sind. Das Anbringen des Filters kann die Herstellung der Verbundscheibe dadurch nicht nachteilig beeinflussen, wie es beispielsweise beim Einlaminieren eines Filters in die Zwischenschicht auftreten kann, wobei beispielsweise Verwerfungen oder sonstige Mängel erzeugt werden können.

Die Herstellung der Verbundscheibe erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt üblicherweise unter Einwirkung von Hitze, Vakuum und / oder Druck. Die Scheibe und gegebenenfalls die Außenscheibe können einem an sich bekannten Biegeprozess unterzogen werden, bevorzugt bei Temperaturen von 500°C bis 700°C.
Die erfindungsgemäße Fahrzeugscheibe mit einem optischen Filter wird bevorzugt in Fortbewegungsmitteln für den Verkehr auf dem Lande, in der Luft oder zu Wasser verwendet, beispielsweise in Zügen, Schiffen und insbesondere Kraftfahrzeugen, beispielsweise als Windschutzscheibe, Heckscheibe, Seitenscheibe und / oder Dachscheibe. Die erfindungsgemäße Fahrzeugscheibe ist besonders bevorzugt als Verbundscheibe ausgebildet und wird als Windschutzscheibe oder Heckscheibe eines Fahrzeugs, insbesondere Kraftfahrzeugs, verwendet.
Die Erfindung umfasst weiter die Verwendung eines erfindungsgemäßen optischen Filters auf der innenraumseitigen Oberfläche einer Fahrzeugscheibe zur Steigerung der Empfindlichkeit eines innenraumseitig der Fahrzeugscheibe angeordneten Senders oder Empfängers von elektromagnetischer Strahlung. Die Erfindung umfasst außerdem die Verwendung einer Schicht eines erfindungsgemäßen Klebstoffs zum Anbringen eines optischen Filters auf der innenraumseitigen Oberfläche einer Fahrzeugscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Fahrzeugscheibe,
- Fig. 2: einen Querschnitt entlang A-A' durch die Fahrzeugscheibe aus Fig. 1,
- Fig. 3: eine vergrößerte Darstellung des Abschitts Z aus Fig. 2 und
- Fig. 4: ein Flussdiagramm einer Ausführungsform des erfindungsgemäßen Verfahrens.

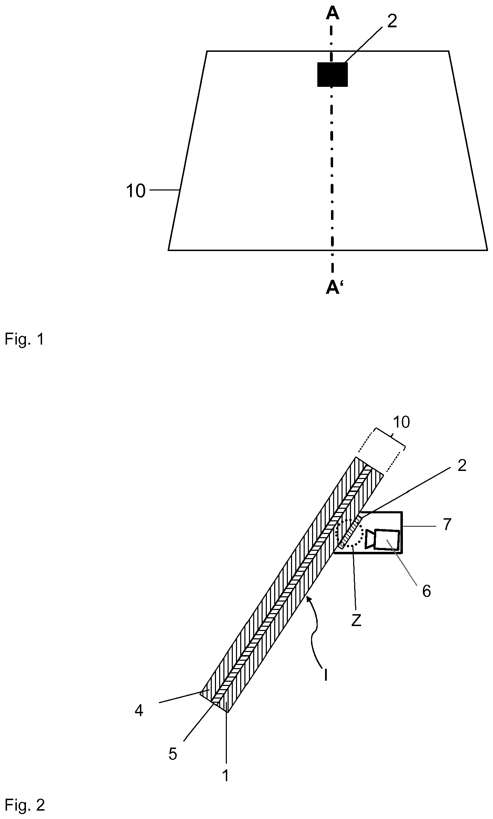

Fig. 1, Fig. 2 und Fig. 3 zeigen je ein Detail einer erfindungsgemäßen Fahrzeugscheibe mit einem optischen Filter. Die Fahrzeugscheibe ist eine Verbundscheibe 10. Die Verbundscheibe 10 besteht aus einer ersten Scheibe 1 und einer Außenscheibe 4, welche über eine thermoplastische Zwischenschicht 5 flächenmäßig miteinander verbunden sind. Die Scheibe 1 ist die Innenscheibe der Verbundscheibe 10. Die Scheibe 1 und die Außenscheibe 4 bestehen aus Glas, insbesondere Kalk-Natron-Glas. Die Scheibe 1 und die Außenscheibe 4 weisen eine Dicke von 2,1 mm auf. Die Zwischenschicht 5 besteht aus Polyvinylbutyral (PVB) und weist eine Dicke von 0,76 mm auf. Die Verbundscheibe 10 ist als Windschutzscheibe eines Kraftfahrzeugs vorgesehen.

Auf der innenraumseitigen Oberfläche (I) der Verbundscheibe 10, welche zugleich die innenraumseitige Oberfläche der Scheibe 1 ist, ist ein optisches Filter 2 angeordnet. Das optische Filter 2 ist in der Fig. 1 in Durchsicht durch die transparente Verbundscheibe 10 zu erkennen. Das optische Filter 2 hat beispielsweise die Funktion, die Empfindlichkeit eines innenraumseitig der Verbundscheibe 10 angeordneten Senders oder Empfängers 6 zu verbessern. Der Empfänger 6 ist beispielsweise ein Regensensor, welcher auf an sich bekannte Weise mittels infraroter Strahlung die Benetzung der Scheibenaußenseite mit Feuchtigkeit misst, um die Funktion des Scheibenwischers zu steuern. Das optische Filter 2 ist ein Tageslichtblocker, welcher für infrarote Strahlung weitgehend transparent ist und für Strahlung im sichtbaren Bereich eine geringe Transmission aufweist. Das optische Filter ist im Bereich eines sogenannten Sensorfensters im Strahlengang des Empfängers 6 angeordnet und reduziert dadurch die Menge auf den Detektor treffenden sichtbaren Lichts. Dadurch wird die Empfindlichkeit im infraroten Spektralbereich erhöht. Der Empfänger 6 und das optische Filter 2 sind in einem gemeinsamen Gehäuse 7 aus Kunststoff angeordnet, welches mit der innenraumseitigen Oberfläche (I) der Verbundscheibe 10 verbunden ist.

Das optische Filter 2 ist als Kunststofffolie ausgebildet. Die Folie enthält beispielsweise PET hoher optischer Qualität, welchem lichtabsorbierende Pigmente zugesetzt sind. Das optische Filter 2 weist beispielsweise eine Dicke von 100 µm auf.

Das optische Filter 2 ist mittels einer Schicht eines Klebstoffs 3 auf der Scheibe 1 verbunden. Der Klebstoff 3 ist ein optisch klarer Acrylat-Klebstoff. Der Klebstoff 3 weist eine Schichtdicke von beispielsweise 25 µm auf. Solche Klebstoffschichten können als Folien kommerziell erworben werden. Ein geeigneter Klebstoff ist beispielsweise "Optically Clear Adhesive 8211" der Firma 3M.

Die Scheibe 1 weist einen Brechungsindex von 1,52 auf, die Schicht des Klebstoffs 3 einen Brechungsindex von 1,47 und das optische Filter 2 einen Brechungsindex von 1,48. Durch die geringe Differenz der Brechungsindizes der Scheibe 1, optischem Filter 2 und Klebstoff 3 können Reflexionsverluste wirkungsvoll vermieden werden. Die maximale Differenz, nämlich die Differenz zwischen den Brechungsindizes von Klebstoff 3 und Scheibe 1, beträgt nur 0,05.

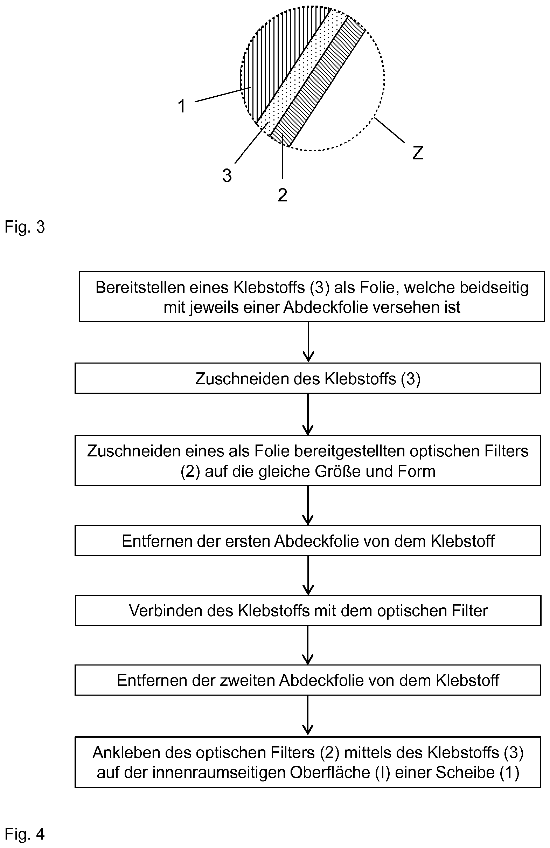

Fig. 4 zeigt ein Flussdiagramm eines Ausführungsbeispiels des erfindungsgemäßen Verfahrens zur Herstellung einer Fahrzeugscheibe mit einem optischen Filter.

### Bezugszeichenliste:

- (1): Scheibe
- (2): optisches Filter
- (3): Klebstoff
- (4): Außenscheibe
- (5): thermoplastische Zwischenschicht
- (6): Sender / Empfänger von elektromagnetischer Strahlung
- (7): Gehäuse
- (10): Verbundscheibe

- (I): innenraumseitige Oberfläche der Scheibe 1

- A-A': Schnittlinie

## Patentansprüche

1. Fahrzeugscheibe, die eine Kraftfahrzeug-Windschutzscheibe oder -Heckscheibe ist, mit einem optischen Filter, mindestens umfassend:
- eine Scheibe (1) und
- ein optisches Filter (2), welches über zumindest eine Schicht eines Klebstoffs (3) mit der innenraumseitigen Oberfläche (I) der Scheibe (1) verbunden ist,
wobei die Fläche des optischen Filters (2) weniger als 20 % der Fläche der Scheibe (1) beträgt und wobei das optische Filter (2) im Strahlengang eines Senders oder Empfängers (6) von elektromagnetischer Strahlung, welcher in einem an der innenraumseitigen Oberfläche (I) der Scheibe (1) angebrachten Gehäuse (7) befindlich ist, angeordnet ist,
wobei das optische Filter (2) ein Tageslichtfilter ist und wobei die Schicht des Klebstoffs (3) eine Absorption im sichtbaren Spektralbereich von kleiner als 5% aufweist.

2. Fahrzeugscheibe nach Anspruch 1, wobei der Sender oder Empfänger (6) ein Regensensor ist.

3. Fahrzeugscheibe nach Anspruch 1 oder 2, wobei das optische Filter (2) als Folie ausgebildet ist und zumindest einen Kunststoff enthält, bevorzugt Polyethylenterephthalat (PET) und/oder Polycarbonat (PC).

4. Fahrzeugscheibe nach einem der Ansprüche 1 bis 3, wobei das optische Filter (2) eine Dicke von 5 µm bis 200 µm, bevorzugt von 25 µm bis 150 µm aufweist.

5. Fahrzeugscheibe nach einem der Ansprüche 1 bis 4, wobei das Tageslichtfilter eine gemittelte Transmission im Wellenlängenbereich von 380 nm bis 800 nm von kleiner als 10% und eine gemittelte Transmission im Wellenlängenbereich von 800 nm bis 1000 nm von größer als 20% aufweist.

6. Fahrzeugscheibe nach einem der Ansprüche 1 bis 5, wobei das optische Filter (2) eine Fläche von 1 cm² bis 10000 cm², bevorzugt von 5 cm² bis 1000 cm² und besonders bevorzugt von 10 cm² bis 500 cm² aufweist.

7. Fahrzeugscheibe nach einem der Ansprüche 1 bis 6, wobei die Schicht des Klebstoffs (3) eine Absorption im sichtbaren Spektralbereich von kleiner als 2% aufweist.

8. Fahrzeugscheibe nach einem der Ansprüche 1 bis 7, wobei die Schicht des Klebstoffs (3) eine Dicke von kleiner oder gleich 100 µm, bevorzugt kleiner oder gleich 50 µm, besonders bevorzugt kleiner oder gleich 30 µm aufweist.

9. Fahrzeugscheibe nach einem der Ansprüche 1 bis 8, wobei der Klebstoff (3) keine thermoplastisch wirkende Klebefolie ist.

10. Fahrzeugscheibe nach einem der Ansprüche 1 bis 9, wobei der Brechungsindex der Scheibe (1), der Brechungsindex des Klebstoffs (3) und der Brechungsindex des optischen Filters (2) um höchstens 0,2 voneinander abweichen, bevorzugt um höchstens 0,1, besonders bevorzugt um höchstens 0,08.

11. Fahrzeugscheibe nach einem der Ansprüche 1 bis 10, wobei die Scheibe (1) die Innenscheibe einer Verbundscheibe (10) ist und über eine thermoplastische Zwischenschicht (5) mit einer Außenscheibe (4) verbunden ist.

12. Verfahren zur Herstellung einer Fahrzeugscheibe mit einem optischen Filter nach einem der Ansprüche 1 bis 11, wobei
(a) ein optisches Filter (2) mit einer Schicht eines Klebstoffs (3) versehen wird und
(b) das optische Filter (2) durch die Schicht des Klebstoffs (3) auf der innenraumseitigen Oberfläche (I) einer Scheibe (1) angebracht wird, wobei die Fläche des optischen Filters (2) weniger als 20 % der Fläche der Scheibe (1) beträgt, und
(c) ein Sender oder Empfänger (6) von elektromagnetischer Strahlung innenraumseitig der Scheibe (1) angeordnet wird, wobei das optische Filter (2) im Strahlengang des Senders oder Empfängers angeordnet wird.

13. Verfahren nach Anspruch 12, wobei die Schicht des Klebstoffs (3) als Folie bereitgestellt wird, welche beidseitig mit einer ersten und einer zweiten Abdeckfolie versehen ist, und wobei nacheinander
- die Schicht des Klebstoffs (3) und das optische Filter (2) auf die gleiche Form und Größe zurechtgeschnitten werden,
- die erste Abdeckfolie entfernt wird,
- die Schicht des Klebstoffs (3) mit dem optischen Filter (2) verbunden wird,
- die zweite Abdeckfolie entfernt wird und
- das optische Filter (2) durch die Schicht des Klebstoffs (3) auf der innenraumseitigen Oberfläche (I) einer Scheibe (1) angebracht wird.

14. Verwendung einer Fahrzeugscheibe mit einem optischen Filter nach einem der Ansprüche 1 bis 11 in Kraftfahrzeugen als Windschutzscheibe oder Heckscheibe.

## Claims

1. Vehicle pane, which is a motor vehicle windshield or rear window, with an optical filter, comprising at least:
- a pane (1) and
- an optical filter (2) that is joined to the interior-side surface (I) of the pane (1) via at least one layer of an adhesive (3),
wherein the area of the optical filter (2) is less than 20% of the area of the pane (1) and wherein the optical filter (2) is arranged in the beam path of a transmitter or receiver (6) of electromagnetic radiation, which is situated in a housing (7) mounted on the interior-side surface (I) of the pane (1),
wherein the optical filter (2) is a daylight filter and wherein the layer of the adhesive (3) has absorption of less than 5% in the visible spectral range.

2. Vehicle pane according to claim 1, wherein the transmitter or receiver (6) is a rain sensor.

3. Vehicle pane according to claim 1 or 2, wherein the optical filter (2) is implemented as a film and includes at least one plastic, preferably polyethylene terephthalate (PET) and/or polycarbonate (PC).

4. Vehicle pane according to one of claims 1 through 3, wherein the optical filter (2) has a thickness of 5 µm to 200 µm, preferably of 25 µm to 150 µm.

5. Vehicle pane according to one of claims 1 through 4, wherein the daylight filter has average transmission in the wavelength range from 380 nm to 800 nm less than 10% and average transmission in the wavelength range from 800 nm to 1000 nm greater than 20%.

6. Vehicle pane according to one of claims 1 through 5, wherein the optical filter (2) has an area of 1 cm² to 10,000 cm², preferably of 5 cm² to 1000 cm², and particularly preferably of 10 cm² to 500 cm².

7. Vehicle pane according to one of claims 1 through 6, wherein the layer of the adhesive (3) has absorption of less than 2% in the visible spectral range.

8. Vehicle pane according to one of claims 1 through 7, wherein the layer of the adhesive (3) has a thickness less than or equal to 100 µm, preferably less than or equal to 50 µm, particularly preferably less than or equal to 30 µm.

9. Vehicle pane according to one of claims 1 through 8, wherein the adhesive (3) is not a thermoplastically acting adhesive film.

10. Vehicle pane according to one of claims 1 through 9, wherein the refractive index of the pane (1), the refractive index of the adhesive (3), and the reactive index of the optical filter (2) differ from one another by at most 0.2, preferably by at most 0.1, particularly preferably by at most 0.08.

11. Vehicle pane according to one of claims 1 through 10, wherein the pane (1) is the inner pane of a composite pane (10) and is joined to an outer pane (4) via a thermoplastic intermediate layer (5).

12. Method for producing a vehicle pane with an optical filter according to one of claims 1 through 11, wherein
(a) an optical filter (2) is provided with a layer of an adhesive (3) and
(b) the optical filter (2) is mounted on the interior-side surface (I) of a pane (1) by means of the layer of the adhesive (3), wherein the area of the optical filter (2) is less than 20% of the area of the pane (1), and
(c) a transmitter or receiver (6) of electromagnetic radiation is arranged on the interior-side of the pane (1), wherein the optical filter (2) is arranged in the beam path of the transmitter or receiver.

13. Method according to claim 12, wherein the layer of the adhesive (3) is provided as a film that is provided on both sides with a first and a second covering film, and wherein successively
- the layer of the adhesive (3) and the optical filter (2) are cut to the same shape and size,
- the first covering film is removed,
- the layer of the adhesive (3) is joined to the optical filter (2),
- the second covering film is removed, and
- the optical filter (2) is mounted on the interior-side surface (I) of a pane (1) by means of the layer of the adhesive (3).

14. Use of a vehicle pane with an optical filter according to one of claims 1 through 11 in motor vehicles as a windshield or a rear window.

## Revendications

1. Vitrage automobile, qui est un pare-brise ou une vitre arrière de véhicule automobile, ayant un filtre optique, comportant au moins :
une vitre (1) ; et
un filtre optique (2), lequel est lié à la surface côté habitacle (I) de la vitre (1) par au moins une couche d'un adhésif (3),
dans lequel la surface du filtre optique (2) s'élève à moins de 20 % de la surface de la vitre (1) et dans lequel le filtre optique (2) est disposé dans le trajet de faisceau d'un émetteur ou d'un récepteur (6) de rayonnement électromagnétique, lequel est situé dans un boîtier (7) monté sur la surface côté habitacle (I) de la vitre (1),
dans lequel le filtre optique (2) est un filtre de lumière du jour et dans lequel la couche de l'adhésif (3) présente une absorption dans le domaine spectral visible de moins de 5 %.

2. Vitrage automobile selon la revendication 1, dans lequel l'émetteur ou le récepteur (6) est un capteur de pluie.

3. Vitrage automobile selon l'une des revendications 1 ou 2, dans lequel le filtre optique (2) est réalisé sous la forme d'un film et contient au moins une matière plastique, de préférence du poly(téréphtalate d'éthylène) (PET) et/ou du polycarbonate (PC).

4. Vitrage automobile selon l'une des revendications 1 à 3, dans lequel le filtre optique (2) présente une épaisseur de 5 µm à 200 µm, de préférence de 25 µm à 150 µm.

5. Vitrage automobile selon l'une des revendications 1 à 4, dans lequel le filtre de lumière du jour présente une transmission moyenne dans le domaine des longueurs d'onde de 380 nm à 800 nm de moins de 10 % et une transmission moyenne dans le domaine des longueurs d'onde de 800 nm à 1 000 nm de plus de 20%.

6. Vitrage automobile selon l'une des revendications 1 à 5, dans lequel le filtre optique (2) présente une surface de 1 cm² à 10 000 cm², de préférence de 5 cm² à 1 000 cm² et de manière particulièrement préférée de 10 cm² à 500 cm².

7. Vitrage automobile selon l'une des revendications 1 à 6, dans lequel la couche de l'adhésif (3) présente une absorption dans le domaine spectral visible de moins de 2 %.

8. Vitrage automobile selon l'une des revendications 1 à 7, dans lequel la couche de l'adhésif (3) présente une épaisseur inférieure ou égale à 100 µm, de préférence inférieure ou égale à 50 µm, de manière particulièrement préférée inférieure ou égale à 30 µm.

9. Vitrage automobile selon l'une des revendications 1 à 8, dans lequel l'adhésif (3) n'est pas un film adhésif à effet thermoplastique.

10. Vitrage automobile selon l'une des revendications 1 à 9, dans lequel l'indice de réfraction de la vitre (1), l'indice de réfraction de l'adhésif (3) et l'indice de réfraction du filtre optique (2) diffèrent les uns des autres d'au plus 0,2 de préférence d'au plus 0,1, de manière particulièrement préférée d'au plus 0,08.

11. Vitrage automobile selon l'une des revendications 1 à 10, dans lequel la vitre (1) est la vitre intérieure d'un vitrage feuilleté (10) et est liée à une vitre extérieure (4) par une couche intermédiaire thermoplastique (5).

12. Procédé de fabrication d'un vitrage ayant un filtre optique selon l'une des revendications 1 à 11, dans lequel
(a) un filtre optique (2) est doté d'une couche d'un adhésif (3) ; et
(b) le filtre optique (2) est appliqué sur la surface côté habitacle (I) d'une vitre (1) par la couche de l'adhésif (3), la surface du filtre optique (2) s'élevant à moins de 20 % de la surface de la vitre (1) ; et
(c) un émetteur ou un récepteur (6) de rayonnement électromagnétique est disposé côté habitacle de la vitre (1), le filtre optique (2) étant disposé dans le trajet de faisceau de l'émetteur ou du récepteur.

13. Procédé selon la revendication 12, dans lequel la couche de l'adhésif (3) est fournie sous la forme d'un film, lequel est doté des deux côtés d'un premier et d'un second film de recouvrement, et dans lequel successivement
- la couche de l'adhésif (3a) et le filtre optique (2) sont rognés à la même forme et à la même dimension ;
- le premier film de recouvrement est retiré ;
- la couche de l'adhésif (3) est liée au filtre optique (2) ;
- le second film de recouvrement est retiré ; et
- le filtre optique (2) est appliqué sur la surface côté habitacle (I) d'une vitre (1) par la couche de l'adhésif (3).

14. Utilisation d'un vitrage automobile ayant un filtre optique selon l'une des revendications 1 à 11 dans des véhicules automobiles en tant que pare-brise ou vitre arrière.
